# EUROPEAN PATENT APPLICATION

(11) **EP 4 459 323 A1**
(43) Date of publication of application: **06.11.2024**
(21) Application number: 22928587.9
(22) Date of filing: 24.02.2022
(51) Int. Cl.: G01S 13/46

(54) **RADAR SYSTEM**

(71) Applicant: MITSUBISHI ELECTRIC CORPORATION, Chiyoda-ku Tokyo 100-8310 (JP)
(72) Inventor: KAWASAKI, Kengo, Tokyo 100-8310 (JP); MIZUTANI, Hiroyuki, Tokyo 100-8310 (JP); NAKAMIZO, Hideyuki, Tokyo 100-8310 (JP); SASAKAWA, Dai, Tokyo 100-8310 (JP)
(74) Representative: Pfenning, Meinig & Partner mbB
(86) International application number: PCT/JP2022/007458
(87) International publication number: WO 2023/162057

(57) **Abstract**

A first radar transmitter capable of transmitting a pulse-modulated radar signal to a target (2), a second radar transmitter capable of transmitting a radar signal to the target (2), a radar receiver capable of simultaneously receiving a radar signal transmitted by the first radar transmitter and reflected by the target (2) and a radar signal transmitted by the second radar transmitter and reflected by the target (2), and a signal control unit (12a) to control one or more of a carrier frequency, a pulse recurrence frequency, and a duty ratio of a pulse-modulated radar signal, and a carrier frequency of a non-pulse-modulated radar signal with respect to the first radar transmitter or the first radar transmitter and the second radar transmitter are provided.

## Description

### TECHNICAL FIELD

The present disclosure relates to a radar system including a plurality of radar devices.

### BACKGROUND ART

Conventionally, in order to avoid interference with other radar devices existing in the vicinity, a radar device capable of controlling a carrier frequency of a radar signal is known (see, for example, Patent Literature 1).

### CITATION LIST

### PATENT LITERATURE

Patent Literature 1: JP 2001-099919 A

### SUMMARY OF INVENTION

### TECHNICAL PROBLEM

However, in the radar device disclosed in Patent Literature 1, interference due to unnecessary waves generated when a radar signal is pulse-modulated is not considered.

On the other hand, in order to track a target moving at a high speed, a radar system including a plurality of radar devices such as a multi-static radar may be used. In order to improve the performance of the multi-static radar, the radar device needs to simultaneously receive a plurality of radar signals.

However, in this multi-static radar, when a radar device simultaneously receives a plurality of radar signals, if an unnecessary wave generated from a pulse-modulated radar signal interferes with another radar signal, a reception signal to noise ratio (SNR) in the other radar signal deteriorates and reception sensitivity deteriorates.

The present disclosure has been made to solve the above-described problems, and an object of the present disclosure is to provide a radar system capable of suppressing interference due to an unnecessary wave generated when a radar signal is pulse-modulated, as compared with the related art.

### SOLUTION TO PROBLEM

A radar system according to the present disclosure includes a first radar transmitter capable of transmitting a pulse-modulated radar signal to a target, a second radar transmitter capable of transmitting a radar signal to the target, a radar receiver capable of simultaneously receiving a radar signal transmitted by the first radar transmitter and reflected by the target and a radar signal transmitted by the second radar transmitter and reflected by the target, and a signal control unit to control one or more of a carrier frequency, a pulse recurrence frequency, and a duty ratio of a pulse-modulated radar signal, and a carrier frequency of a non-pulse-modulated radar signal with respect to the first radar transmitter or the first radar transmitter and the second radar transmitter.

### ADVANTAGEOUS EFFECTS OF INVENTION

According to the present disclosure, with the above-described configuration, it is possible to suppress interference due to an unnecessary wave generated when a radar signal is pulse-modulated, as compared with the related art.

### BRIEF DESCRIPTION OF DRAWINGS

FIG. 1 is a diagram illustrating a configuration example and an operation principle of a radar system according to a first embodiment.
FIG. 2 is a diagram illustrating an example of an unnecessary wave generated from a pulse-modulated wave.
FIG. 3 is a diagram illustrating an example of a case where an unnecessary wave generated from a pulse-modulated wave having a carrier frequency of f₁ interferes with a radar reflected wave having a carrier frequency of fz.
FIGS. 4A and 4B are diagrams illustrating an operation example of a signal control unit in the first embodiment, in which FIG. 4A is a diagram illustrating a state before control by the signal control unit, and FIG. 4B is a diagram illustrating a case where the signal control unit controls a carrier frequency.
FIGS. 5A and 5B are diagrams illustrating an operation example of the signal control unit in the first embodiment, in which FIG. 5A is a diagram illustrating a state before control by the signal control unit, and FIG. 5B is a diagram illustrating a case where the signal control unit controls a pulse recurrence frequency.
FIGS. 6A and 6B are diagrams illustrating an operation example of the signal control unit in the first embodiment, in which FIG. 6A is a diagram illustrating a state before control by the signal control unit, and FIG. 6B is a diagram illustrating a case where the signal control unit controls a duty ratio.
FIG. 7 is a flowchart illustrating a control operation example of a radar signal by the radar system according to the first embodiment.
FIGS. 8A and 8B are diagrams describing a configuration example and an operation principle of a radar system according to a second embodiment, in which FIG. 8A is a diagram illustrating a state in a time slot A illustrated in FIG. 10, and FIG. 8B is a diagram illustrating a state in a time slot B illustrated in FIG. 10.
FIG. 9 is a diagram illustrating an example of a circuit configuration of a radar transceiver in the second embodiment.
FIG. 10 is a time chart describing an operation example of the radar system according to the second embodiment.
FIG. 11 is a flowchart illustrating a control operation example of a radar signal by the radar system according to the second embodiment.
FIGS. 12A and 12B are diagrams illustrating an operation example of a signal control unit in a third embodiment, in which FIG. 12A is a diagram illustrating a state before control by the signal control unit, and FIG. 12B is a diagram illustrating a state after control by the signal control unit.
FIGS. 13A and 13B are diagrams illustrating an operation example of a signal control unit in a fourth embodiment, in which FIG. 13A is a diagram illustrating a state before control by the signal control unit and FIG. 13B is a diagram illustrating a state after control by the signal control unit.
FIGS. 14A and 14B are diagrams illustrating a hardware configuration example of a signal control unit in the first embodiment.

### DESCRIPTION OF EMBODIMENTS

Hereinafter, embodiments will be described in detail with reference to the drawings.

### First Embodiment.

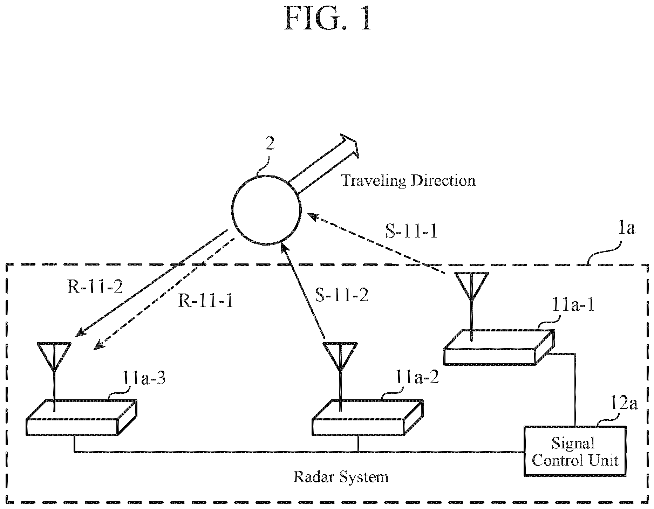

FIG. 1 is a diagram illustrating a configuration example and operation principles of a radar system 1a according to a first embodiment.

The radar system 1a is a system including a plurality of radar devices and capable of detecting a distance from the radar system 1a to a target 2 and a speed of the target 2 at high speed. The radar system 1a is applicable to, for example, a multi-static radar.

Note that, in FIG. 1, a thick arrow indicates a traveling direction of the target 2, and a thin arrow indicates a traveling direction of a radar signal transmitted from the radar device or a radar reflected wave that is a radar signal reflected by the target 2.

Further, as illustrated in FIG. 1, the radar system 1a includes a radar transceiver 11a-1, a radar transceiver 11a-2, and a radar transceiver 1 1a-3 as a plurality of radar devices, and further includes a signal control unit 12a.

The radar transceiver 11a-1 is a radar device in which a radar transmitter that performs transmission of a radar signal and a radar receiver that performs reception of a radar signal are integrated.

The radar transceiver 11a-1 can transmit a radar signal S-11-1 toward the target 2 as a function of a radar transmitter. Note that the radar signal S-11-1 transmitted by the radar transceiver 11a-1 is a pulse-modulated radar signal, that is, a pulse-modulated wave.

In addition, the radar transceiver 11a-1 can simultaneously receive, as a function of a radar receiver, radar reflected waves R-11-2 and R-11-3 which are radar signals transmitted by a plurality of other radar transceivers 11a-2 and 11a-3 and reflected by the target 2.

Then, the radar transceiver 11a-1 can simultaneously process the plurality of received radar reflected waves R-11-2 and R-11-3. Thus, the radar transceiver 11a-1 can detect a distance from the radar system 1a to the target 2 and a speed of the target 2 at high speed.

The radar transceiver 11a-2 is a radar device in which a radar transmitter that performs transmission of a radar signal and a radar receiver that performs reception of a radar signal are integrated.

The radar transceiver 11a-2 can transmit a radar signal S-11-2 toward the target 2 as a function of a radar transmitter. Note that the radar signal S-11-2 transmitted by the radar transceiver 11a-2 may be a pulse-modulated wave or a radar signal such as a frequency modulated continuous wave (FMCW) that is not pulse-modulated, for example.

In addition, the radar transceiver 11a-2 can simultaneously receive, as a function of a radar receiver, radar reflected waves R-11-1 and R-11-3 which are radar signals transmitted by a plurality of other radar transceivers 11a-1 and 11a-3 and reflected by the target 2.

Then, the radar transceiver 11a-2 can simultaneously process the plurality of received radar reflected waves R-11-1 and R-11-3. Thus, the radar transceiver 11a-2 can detect a distance from the radar system 1a to the target 2 and a speed of the target 2 at high speed.

The radar transceiver 11a-3 is a radar device in which a radar transmitter that performs transmission of a radar signal and a radar receiver that performs reception of a radar signal are integrated.

The radar transceiver 11a-3 can transmit a radar signal S-11-3 toward the target 2 as a function of a radar transmitter. Note that the radar signal S-11-3 transmitted by the radar transceiver 11a-3 may be a pulse-modulated wave or a non-pulse-modulated radar signal.

In addition, the radar transceiver 11a-3 can simultaneously receive, as a function of a radar receiver, radar reflected waves R-11-1 and R-11-2 which are radar signals transmitted by a plurality of other radar transceivers 11a-1 and 11a-2 and reflected by the target 2.

Then, the radar transceiver 11a-3 can simultaneously process the plurality of received radar reflected waves R-1 1-1 and R-1 1-2. Thus, the radar transceiver 11a-3 can detect a distance from the radar system 1a to the target 2 and a speed of the target 2 at high speed.

Note that FIG. 1 illustrates a case where the radar transceiver 11a-1 functions as a radar transceiver that performs only transmission, the radar transceiver 11a-2 functions as a radar transceiver that performs only transmission, and the radar transceiver 11a-3 functions as a radar transceiver that performs only reception. That is, in the radar system 1a illustrated in FIG. 1, a case where a radar transceiver that performs transmission and a radar transceiver that performs reception are different radar transceivers is illustrated.

The signal control unit 12a controls one or more of a carrier frequency (carrier frequency), a pulse recurrence frequency (PRF), and a duty ratio (Duty) of a pulse-modulated radar signal, and a carrier frequency of a non-pulse-modulated radar signal, with respect to the radar transceiver that performs transmission among the radar transceivers 11a-1 to 11a-3.

At this time, the signal control unit 12a performs the above control in such a manner that unnecessary waves generated from the pulse-modulated radar signal and a radar signal different from the radar signal do not interfere with each other. That is, in a case where the carrier frequency of the pulse-modulated radar signal is f_{A}, the pulse recurrence frequency is PRF_{A}, the duty ratio is Duty, a carrier frequency of a radar signal different from the radar signal is f_{B}, and a positive integer is n, the signal control unit 12a performs the above control so as to satisfy f_{B} = f_{A} ± {PRF_{A} × (1/Duty)} or f_{B} ≠ f_{A} ± nPRF_{A}.

Note that the radar system 1a illustrated in FIG. 1 illustrates a case where three radar transceivers 11a-1 to 11a-3 are provided. That is, in the radar system 1a illustrated in FIG. 1, a configuration example is illustrated in a case where the number of radar transceivers is the minimum in a case where a radar transceiver that operates as a device that performs transmission and a radar transceiver that operates as a device that performs reception are different radar transceivers. However, the number of the radar transceivers is not limited to the number illustrated in FIG. 1.

Further, FIG. 1 illustrates a case where the radar transceivers 11a-1 to 11a-3 having both a function of performing transmission and a function of performing reception are provided as radar devices, the radar transceiver 11a-1 operates as a device that performs transmission, the radar transceiver 11a-2 operates as a device that performs transmission, and the radar transceiver 11a-3 operates as a device that performs reception. In this case, the radar transceivers 11a-1 to 11a-3 can arbitrarily change whether or not to operate to perform transmission and whether or not to operate to perform reception.

On the other hand, in a case where it is not necessary to perform the change, the radar device does not need to be a radar transceiver having both the functions. In this case, for example, the radar transmitter that performs transmission or the radar receiver that performs reception may be provided as the radar device instead of the radar transceiver. For example, in the example of FIG. 1, the radar transceiver 1 1a-1 may be a radar transmitter (first radar transmitter), the radar transceiver 11a-2 may be a radar transmitter (second radar transmitter), and the radar transceiver 11a-3 may be a radar receiver.

Next, an operation example of the radar system 1a according to the first embodiment illustrated in FIG. 1 will be described.

In the example of FIG. 1, first, the radar transceiver 1 1a-1 transmits the radar signal S-11-1 toward the target 2, and the radar transceiver 1 1a-2 transmits the radar signal S-11-2 toward the target 2. Here, it is assumed that both the radar signal S-11-1 and the radar signal S-11-2 are pulse-modulated waves.

In addition, the signal control unit 12a controls one or more of the carrier frequencies, the pulse recurrence frequency, and the duty ratio of the radar signal S-11-1, and the carrier frequency, the pulse recurrence frequency, and the duty ratio of the radar signal S-11-2.

Then, the radar transceiver 11a-3 simultaneously receives the radar reflected wave R-11-1, which is a radar signal transmitted by the radar transceiver 1 1a-1 and reflected by the target 2, and the radar reflected wave R-11-2, which is a radar signal transmitted by the radar transceiver 11a-2 and reflected by the target 2.

Then, the radar transceiver 11a-3 simultaneously performs signal processing on the received radar reflected wave R-11-1 and radar reflected wave R-11-2. Thus, the radar transceiver 11a-3 detects the distance from the radar system 1a to the target 2 and the speed of the target 2 at high speed.

Here, as the radar signal S-11-1 and the radar signal S-11-2, radar signals in a frequency band set by the signal control unit 12a are used.

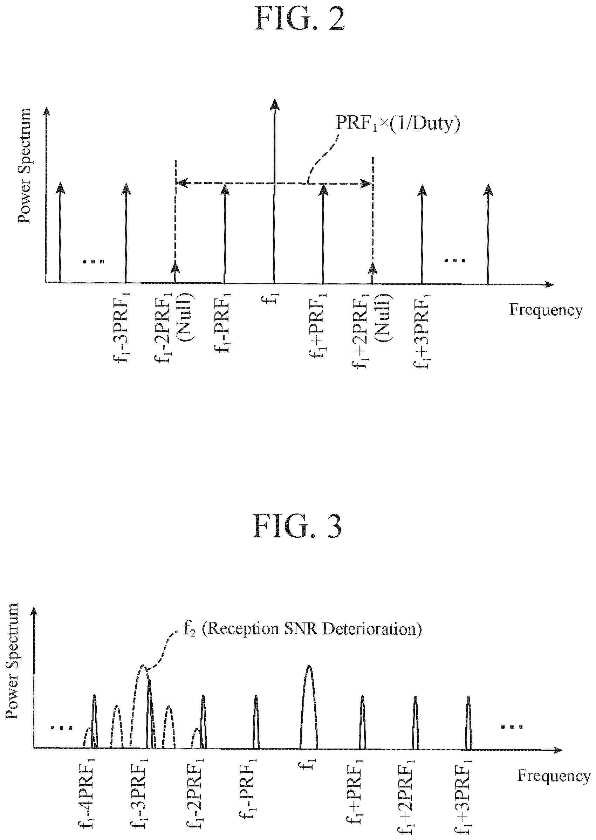

FIG. 2 is a diagram illustrating an example of an unnecessary wave generated from a pulse-modulated wave. In FIG. 2, the vertical axis represents the power spectrum of the radar signal, and the horizontal axis represents the frequency. FIG. 2 illustrates a case where the carrier frequency of the radar signal S-11-1, which is a pulse-modulated wave, is f₁ and the pulse recurrence frequency is PRF₁.

As illustrated in FIG. 2, in a modulated wave such as a pulse-modulated wave, an unnecessary wave is generated for each pulse recurrence frequency around the carrier frequency. On the other hand, the unnecessary wave has Null for each frequency of D = PRF × (1/Duty) around the carrier frequency.

Thus, the signal control unit 12a can suppress generation of unnecessary waves at a frequency of 2PRF at the maximum by appropriately selecting the pulse recurrence frequency and the duty ratio in particular. FIG. 2 illustrates how unnecessary waves are generated in a case where the duty ratio is set in such a manner that Null occurs at a cycle of f₁ ± 2PRF₁.

Here, for example, it is assumed that the carrier frequency of the radar signal S-11-1 as a pulse-modulated wave is f₁ and the pulse recurrence frequency is PRF₁, and the carrier frequency of the radar signal S-11-2 as a pulse-modulated wave is fz and the pulse recurrence frequency is PRF₂.

In this case, an unnecessary wave caused by the radar signal S-11-1 is generated at a frequency of f₁ ± nPRF₁. Thus, when a condition that the carrier frequency of the radar reflected wave R-11-2 is f₁ ± nPRF₁ = fz is satisfied, the radar reflected wave R-11-2 and the unnecessary wave interfere with each other.

Further, similarly, an unnecessary wave caused by the radar signal S-11-2 is generated at a frequency of f₂ ± nPRF₂. Thus, when a condition that the carrier frequency of the radar reflected wave R-11-1 is fz ± nPRFz = f₁ is satisfied, the radar reflected wave R-11-1 and the unnecessary wave interfere with each other.

Accordingly, the signal control unit 12a controls one or more of f₁, PRF₁, and the duty ratio of the radar signal S-11-1, and fz, PRF₂, and the duty ratio of the radar signal S-11-2 in such a manner that the radar reflected wave and the unnecessary wave do not interfere with each other.

For example, the signal control unit 12a controls the pulse recurrence frequency in such a manner that the carrier frequency of the radar reflected wave R-11-2 satisfies a condition of fz ≠ f₁ ± nPRF₁, and the carrier frequency of the radar reflected wave R-11-1 satisfies a condition of f₁ ≠ f₂ ± nPRFz. Thus, the radar system 1a can prevent interference between the radar reflected wave R-11-2 and the unnecessary wave generated from the radar reflected wave R-11-1, and can prevent interference between the radar reflected wave R-11-1 and the unnecessary wave generated from the radar reflected wave R-11-2.

In addition, for example, the signal control unit 12a controls the duty ratio in such a manner that the carrier frequency of the radar reflected wave R-11-2 and the carrier frequency of the radar reflected wave R-11-1 satisfy the relationship of f₂ = f₁ ± D and the relationship of f₁ = f₂ ± D. Thus, the radar system 1a can prevent interference between the radar reflected wave R-11-2 and the unnecessary wave generated from the radar reflected wave R-11-1, and can prevent interference between the radar reflected wave R-11-1 and the unnecessary wave generated from the radar reflected wave R-11-2.

FIG. 3 is a diagram illustrating an example of a case where an unnecessary wave generated from the radar reflected wave R-11-1 having the carrier frequency f₁ interferes with the radar reflected wave R-11-2 having the carrier frequency fz.

In FIG. 3, it can be seen that the unnecessary wave generated from the radar reflected wave R-11-1 interferes with the signal band of the carrier frequency of the radar reflected wave R-11-2. In this case, the reception SNR of the radar reflected wave R-11-2 is deteriorated, and the reception sensitivity is deteriorated.

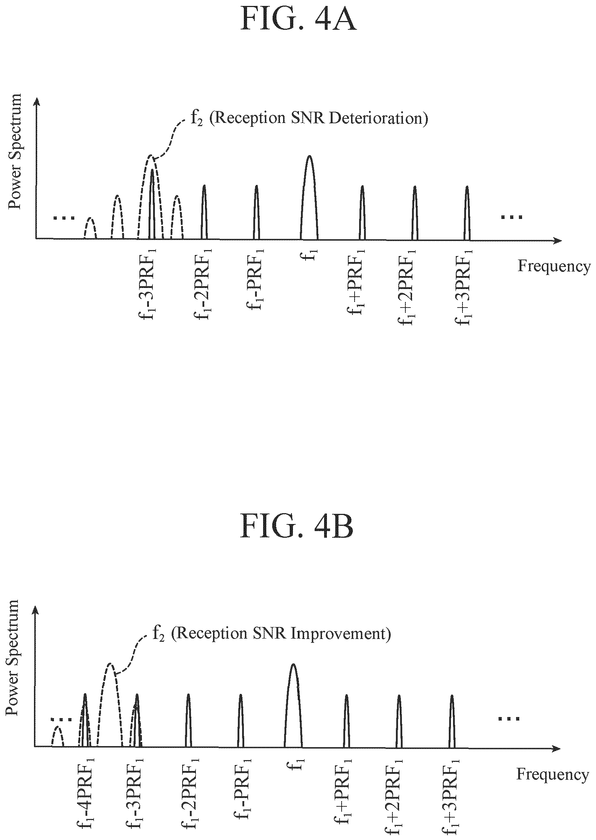

In this case, in order to avoid the interference, the signal control unit 12a controls at least one of the radar signals of the radar transceiver 11a-1 or the radar signal of the radar transceiver 11a-2. An example of the result is illustrated in FIGS. 4, 5, and 6.

FIG. 4 is a diagram illustrating an operation example of the signal control unit 12a in the first embodiment.

FIG. 4A illustrates a state before control by the signal control unit 12a, and an unnecessary wave generated from the radar reflected wave R-11-1 interferes with the radar reflected wave R-11-2. In this case, the reception SNR of the radar reflected wave R-11-2 is deteriorated, and the reception sensitivity is deteriorated.

On the other hand, FIG. 4B illustrates a case where the signal control unit 12a controls the carrier frequency. Here, the signal control unit 12a controls fz of the radar signal S-11-2 to have a frequency different from that of the unnecessary wave generated from the radar reflected wave R-11-1. Thus, deterioration of the reception SNR of the radar reflected wave R-11-2 can be prevented, and deterioration of the reception sensitivity can be prevented.

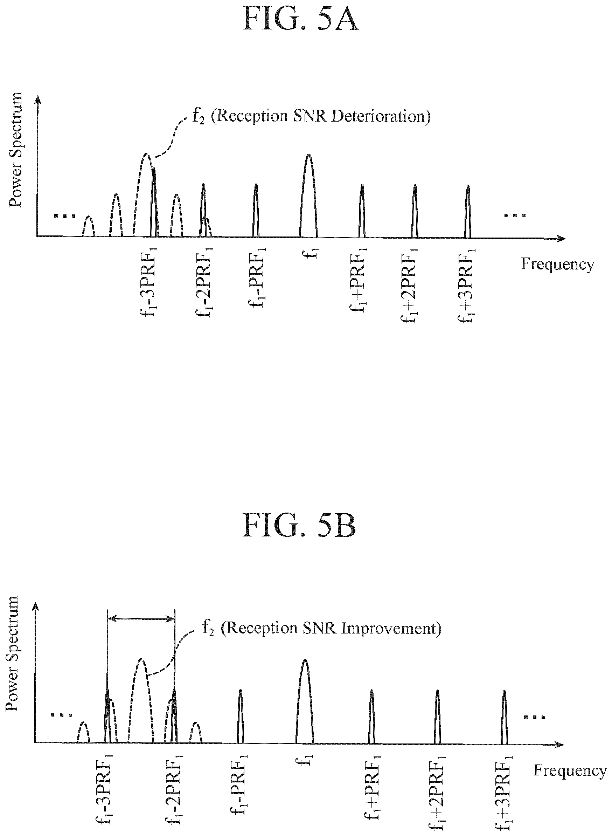

Further, FIG. 5 is a diagram illustrating another operation example of a signal control unit 12a in the first embodiment.

FIG. 5A illustrates a state before control by the signal control unit 12a, and an unnecessary wave generated from the radar reflected wave R-11-1 interferes with the radar reflected wave R-11-2. In this case, the reception SNR of the radar reflected wave R-11-2 is deteriorated, and the reception sensitivity is deteriorated.

On the other hand, FIG. 5B illustrates a case where the signal control unit 12a controls the PRF₁ of the radar signal S-11-1. That is, the signal control unit 12a adjusts the generation interval of the unnecessary wave by controlling the PRF₁ (the section of the arrow illustrated in FIG. 5B). Thus, deterioration of the reception SNR of the radar reflected wave R-11-2 can be prevented, and deterioration of the reception sensitivity can be prevented.

Note that, in FIG. 5, it is assumed a case where there is a limitation on the change of the carrier frequency, or the like.

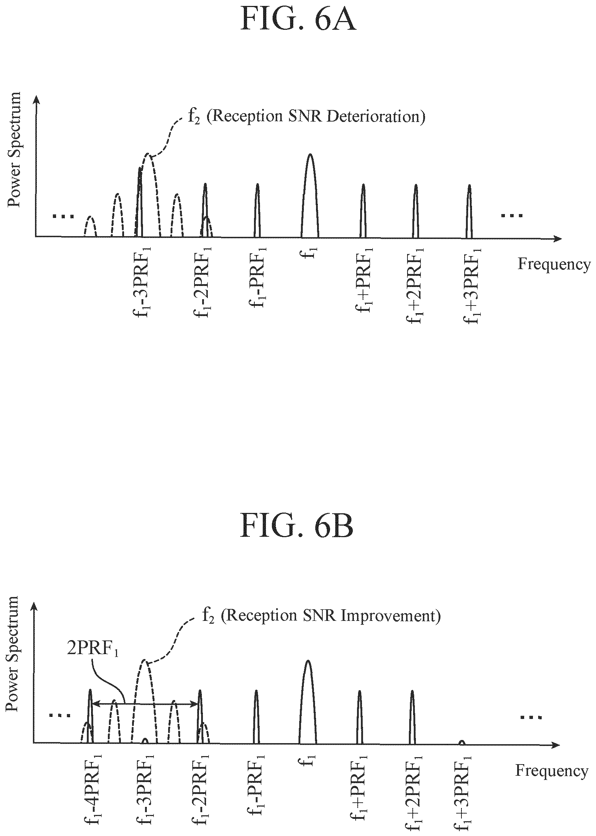

Further, FIG. 6 is a view illustrating another operation example of the signal control unit 12a in the first embodiment.

FIG. 6A illustrates a state before control by the signal control unit 12a, and an unnecessary wave generated from the radar reflected wave R-11-1 interferes with the radar reflected wave R-11-2. In this case, the reception SNR of the radar reflected wave R-11-2 is deteriorated, and the reception sensitivity is deteriorated.

On the other hand, FIG. 6B illustrates a case where the signal control unit 12a controls the duty ratio of the radar signal S-11-1. That is, the signal control unit 12a performs adjustment so as to create Null in the signal band of f₂ by controlling the duty ratio. Thus, deterioration of the reception SNR of the radar reflected wave R-11-2 can be prevented, and deterioration of the reception sensitivity can be prevented.

Note that, in FIG. 6, it is assumed a case where there is a limitation on the change of the carrier frequency, or the like.

Further, in the example of FIG. 6, the carrier frequency of the radar reflected wave R-11-2 satisfies a condition of f₂ = f₁ ± D, so that interference from an unnecessary wave can be suppressed in a wide band of (f₁ - 2PRF₁) - (f₁ - 4PRF₁) = 2PRF₁.

Note that, as an example, a case where the radar transceiver 11a-1 transmits the radar signal S-11-1 toward the target 2, the radar transceiver 11a-2 transmits the radar signal S-11-2 toward the target 2, and the radar transceiver 11a-3 receives the radar reflected wave R-11-1 and the radar reflected wave R-11-2 has been described above. On the other hand, a case where the same applies to a case where the radar transceiver that performs transmission and the radar transceiver that performs reception are arbitrarily replaced is similar to the above.

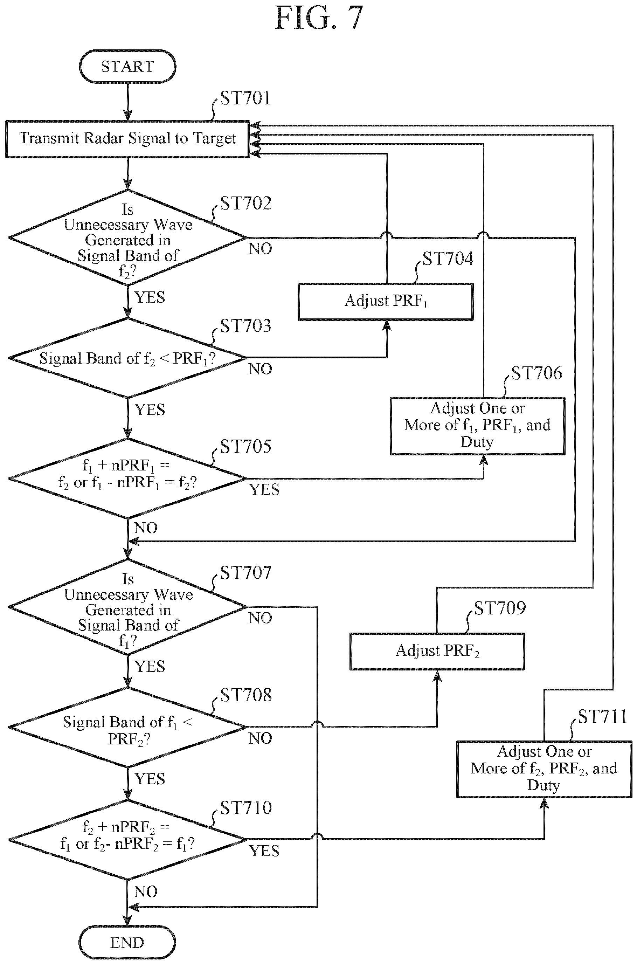

Next, a control operation example of a radar signal in the radar system 1a according to the first embodiment illustrated in FIG. 1 will be described with reference to FIG. 7.

Note that the control operation of the radar signal in the radar system 1a is performed before the operation of the radar system 1a is started. In addition, it is assumed that the carrier frequency of the radar signal S-11-1 is f₁ and the pulse recurrence frequency thereof is PRF₁, and the carrier frequency of the radar signal S-11-2 is f₂ and the pulse recurrence frequency thereof is PRF₂.

In the control operation example of the radar signal in the radar system 1a according to the first embodiment illustrated in FIG. 1, as illustrated in FIG. 7, first, the radar transceiver 11a-1 transmits the radar signal S-11-1 to the target 2, and the radar transceiver 11a-2 transmits the radar signal S-11-2 to the target 2 (step ST701). Note that the signal control unit 12a instructs the radar transceivers 11a-1 and 11a-2 to transmit the radar signals S-11-1 and S-11-2 after setting the carrier frequency, the pulse recurrence frequency, and the duty ratio in advance.

Thereafter, the radar transceiver 11a-3 receives the radar reflected wave R-11-1, which is a radar signal transmitted by the radar transceiver 11a-1 and reflected by the target 2, and the radar reflected wave R-11-2, which is a radar signal transmitted by the radar transceiver 11a-2 and reflected by the target 2.

Next, the radar transceiver 11a-3 determines whether or not there is an unnecessary wave in the signal band of f₂ (step ST702).

At this time, for example, the radar transceiver 11a-3 down-converts the radar reflected wave R-11-2 from a high-frequency signal to a signal of a baseband frequency using a local oscillation signal (LO: Local Oscillator) generated in the vicinity of f₂ by a down-converter (not illustrated). Then, the radar transceiver 11a-3 may determine that there is an unnecessary wave when it is determined that there is a signal having power equal to or higher than a certain threshold near the desired band from the result of the down conversion.

In addition, for example, when f₁ and f₂ are known, the radar transceiver 11a-3 down-converts the radar reflected wave R-11-2 from a high-frequency signal to a signal of a baseband frequency using a local oscillation signal under a condition of f₂ ≈ f₁ ± nPRF₁ by the down-converter (not illustrated). Then, the radar transceiver 11a-3 may determine that there is an unnecessary wave when it is determined that there is a voltage of a DC component equal to or greater than the threshold from the output of the down-converter.

In addition, for example, the radar transceiver 11a-1 and the radar transceiver 1 1a-2 transmit pilot signals for notifying the radar transceiver 1 1a-3 of the signal bands of f₁, f₂, PRF₁, and fz in advance. Then, the radar transceiver 11a-3 may determine the presence of the unnecessary wave using the information indicated by the pilot signal.

In step ST702, when the radar transceiver 11a-3 determines that there is an unnecessary wave in the signal band of f₂, the radar transceiver 11a-3 or the signal control unit 12a determines whether a condition of the signal band of f₂ < PRF₁ is satisfied (step ST703).

At this time, for example, the signal control unit 12a may determine whether the above condition is satisfied on the basis of information held in advance.

In addition, for example, the radar transceiver 11a-1 and the radar transceiver 1 1a-2 transmit pilot signals for notifying the radar transceiver 1 1a-3 of the signal bands of f₁, f₂, PRF₁, and f₂ in advance. Then, the radar transceiver 11a-3 may determine whether the above condition is satisfied using the information indicated by the pilot signals.

In addition, when the radar transceiver 11a-3 receives the radar reflected wave R-11-2 having a reception band including an unnecessary wave, the amplitude of the signal becomes discontinuous when the radar reflected wave R-11-2 is down-converted. Accordingly, for example, the radar transceiver 11a-3 may determine whether or not the above condition is satisfied by determining the presence or absence of the discontinuity.

In step ST703, when the radar transceiver 11a-3 or the signal control unit 12a determines that the condition of the signal band of fz < PRF₁ is not satisfied, the signal control unit 12a adjusts the PRF₁ of the radar signal S-11-1 so as to satisfy the condition of the signal band of fz < PRF₁ (step ST704). That is, if the condition of the signal band of f₂ < PRF₁ is not satisfied, a plurality of unnecessary waves interfere in the signal band, and thus the signal control unit 12a performs adjustment to prevent the interference.

Thereafter, the sequence returns to step ST701.

On the other hand, in step ST703, when the radar transceiver 11a-3 or the signal control unit 12a determines that the condition of the signal band of fz < PRF₁ is satisfied, the radar transceiver 11a-3 or the signal control unit 12a determines whether a condition of f₁ + nPRF₁ = fz or f₁ - nPRF₁ = fz is satisfied (step ST705).

At this time, for example, the signal control unit 12a may determine whether the above condition is satisfied on the basis of information held in advance.

In addition, for example, the radar transceiver 11a-1 and the radar transceiver 1 1a-2 transmit pilot signals for notifying the radar transceiver 1 1a-3 of the signal bands of f₁, f₂, PRF₁, and f₂ in advance. Then, the radar transceiver 11a-3 may determine whether the above condition is satisfied using the information indicated by the pilot signals.

Furthermore, for example, the radar transceiver 11a-3 down-converts the radar reflected wave R-11-2, performs Fourier series expansion of the result, and obtains the PRF of the frequency obtained from the result. Then, the radar transceiver 11a-3 may determine whether the above condition is satisfied from the obtained PRF. Note that, in order to down-convert the radar reflected wave R-11-2, f₁ and f₂ are known in the radar transceiver 11a-3.

In step ST705, when the radar transceiver 11a-3 or the signal control unit 12a determines that the condition of f₁ + nPRF₁ = fz or f₁ - nPRF₁ = fz is satisfied, the signal control unit 12a adjusts one or more of f₁, PRF₁, and the duty ratio of the radar signal S-11-1 so as to satisfy the condition of f₁ ± nPRF₁ ≠ f₂ (step ST706).

Thereafter, the sequence returns to step ST701.

On the other hand, in step ST702, when the radar transceiver 11a-3 determines that there is no unnecessary wave in the signal band of f₂, and in step ST705, when the radar transceiver 11a-3 or the signal control unit 12a determines that the condition of f₁ + nPRF₁ = fz or f₁ - nPRF₁ = fz is not satisfied, the sequence proceeds to step ST707.

Next, the radar transceiver 11a-3 determines whether or not there is an unnecessary wave in the signal band of f₁ (step ST707).

At this time, for example, the radar transceiver 11a-3 down-converts the radar reflected wave R-11-1 from a high-frequency signal to a signal of a baseband frequency using a local oscillation signal (LO) generated in the vicinity of f₁ by the down-converter (not illustrated). Then, the radar transceiver 11a-3 may determine that there is an unnecessary wave when it is determined that there is a signal having power equal to or higher than the certain threshold near the desired band from the result of the down conversion.

In addition, for example, when f₁ and f₂ are known, the radar transceiver 11a-3 down-converts the radar reflected wave R-11-1 from a high-frequency signal to a signal of a baseband frequency using a local oscillation signal under a condition of f₁ ≈ f₂ ± nPRFz by the down-converter (not illustrated). Then, the radar transceiver 11a-3 may determine that there is an unnecessary wave when it is determined that there is a voltage of a DC component equal to or greater than the threshold from the output of the down-converter.

In addition, for example, the radar transceiver 11a-1 and the radar transceiver 1 1a-2 transmit pilot signals for notifying the radar transceiver 1 1a-3 of the signal bands of f₁, f₂, and PRF₂, f₁ in advance. Then, the radar transceiver 11a-3 may determine the presence of the unnecessary wave using the information indicated by the pilot signal.

In step ST707, when the radar transceiver 11a-3 determines that there is an unnecessary wave in the signal band of f₁, the radar transceiver 11a-3 or the signal control unit 12a determines whether a condition of the signal band of f₁ < PRF₂ is satisfied (step ST708).

At this time, for example, the signal control unit 12a may determine whether the above condition is satisfied on the basis of information held in advance.

In addition, for example, the radar transceiver 11a-1 and the radar transceiver 1 1a-2 transmit pilot signals for notifying the radar transceiver 1 1a-3 of the signal bands of f₁, f₂, PRF₂, and f₁ in advance. Then, the radar transceiver 11a-3 may determine whether the above condition is satisfied using the information indicated by the pilot signals.

In addition, when the radar transceiver 11a-3 receives the radar reflected wave R-11-1 having a reception band including an unnecessary wave, the amplitude of the signal becomes discontinuous when the radar reflected wave R-11-1 is down-converted. Accordingly, for example, the radar transceiver 11a-3 may determine whether or not the above condition is satisfied by determining the presence or absence of the discontinuity.

In step ST708, when the radar transceiver 11a-3 or the signal control unit 12a determines that the condition of the signal band of f₁ < PRF₂ is not satisfied, the signal control unit 12a adjusts the PRF₂ of the radar signal S-11-2 so as to satisfy the condition of the signal band of f₁ < PRF₂ (step ST709). That is, if the condition of the signal band of f₁ < PRF₂ is not satisfied, a plurality of unnecessary waves interfere in the signal band, and thus the signal control unit 12a performs adjustment to prevent the interference.

Thereafter, the sequence returns to step ST701.

On the other hand, in step ST708, when the radar transceiver 11a-3 or the signal control unit 12a determines that the condition of the signal band of f₁ < PRF₂ is satisfied, the radar transceiver 11a-3 or the signal control unit 12a determines whether a condition of f₂ + nPRF₂ = f₁ or fz- nPRFz = f₁ is satisfied (step ST710).

At this time, for example, the signal control unit 12a may determine whether the above condition is satisfied on the basis of information held in advance.

In addition, for example, the radar transceiver 1 1a-1 and the radar transceiver 1 1a-2 transmit pilot signals for notifying the radar transceiver 1 1a-3 of the signal bands of f₁, f₂, PRF₂, and f₁ in advance. Then, the radar transceiver 11a-3 may determine whether the above condition is satisfied using the information indicated by the pilot signals.

Furthermore, for example, the radar transceiver 11a-3 down-converts the radar reflected wave R-11-1, performs Fourier series expansion of the result, and obtains the PRF of the frequency obtained from the result. Then, the radar transceiver 11a-3 may determine whether the above condition is satisfied from the obtained PRF. Note that, in order to down-convert the radar reflected wave R-11-1, f₁ and f₂ are known in the radar transceiver 11a-3.

In step ST710, when the radar transceiver 11a-3 or the signal control unit 12a determines that the condition of f₂ + nPRFz = f₁ or fz- nPRFz = f₁ is satisfied, the signal control unit 12a adjusts one or more of fz, PRFz, and the duty ratio of the radar signal S-11-2 so as to satisfy the condition of fz ± nPRFz ≠ f₁ (step ST711).

Thereafter, the sequence returns to step ST701.

On the other hand, when the radar transceiver 11a-3 determines in step ST707 that there is no unnecessary wave in the signal band of f₁, and when the radar transceiver 11a-3 or the signal control unit 12a determines in step ST710 that the condition of f₂ + nPRFz = f₁ or fz- nPRFz = f₁ is not satisfied, the sequence ends.

As described above, according to the first embodiment, the radar system 1a includes the first radar transmitter capable of transmitting a pulse-modulated radar signal to the target 2, the second radar transmitter capable of transmitting a radar signal to the target 2, the radar receiver capable of simultaneously receiving a radar signal transmitted by the first radar transmitter and reflected by the target 2 and a radar signal transmitted by the second radar transmitter and reflected by the target 2, and the signal control unit 12a that controls one or more of a carrier frequency, a pulse recurrence frequency, and a duty ratio of a pulse-modulated radar signal, and a carrier frequency of a non-pulse-modulated radar signal with respect to the first radar transmitter or the first radar transmitter and the second radar transmitter. Thus, the radar system 1a according to the first embodiment can suppress interference due to unnecessary waves generated when a radar signal is pulse-modulated, as compared with the related art.

### Second Embodiment.

In the radar system 1a according to the first embodiment, the case where the radar transceiver that performs transmission and the radar transceiver that performs reception are different radar transceivers has been described. On the other hand, in a radar system 1b according to a second embodiment, a case where a certain radar transceiver performs transmission and reception will be described.

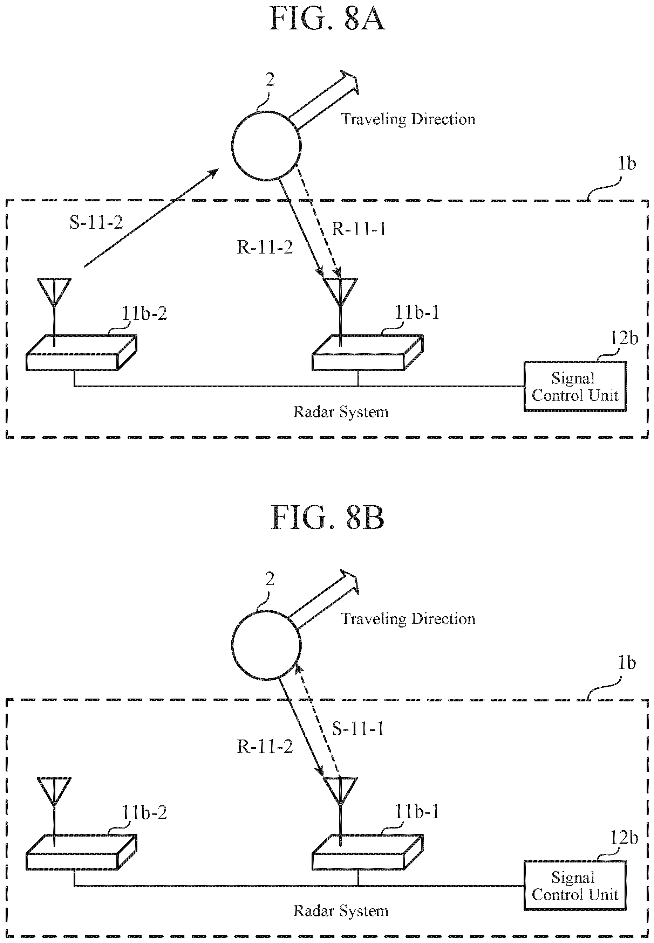

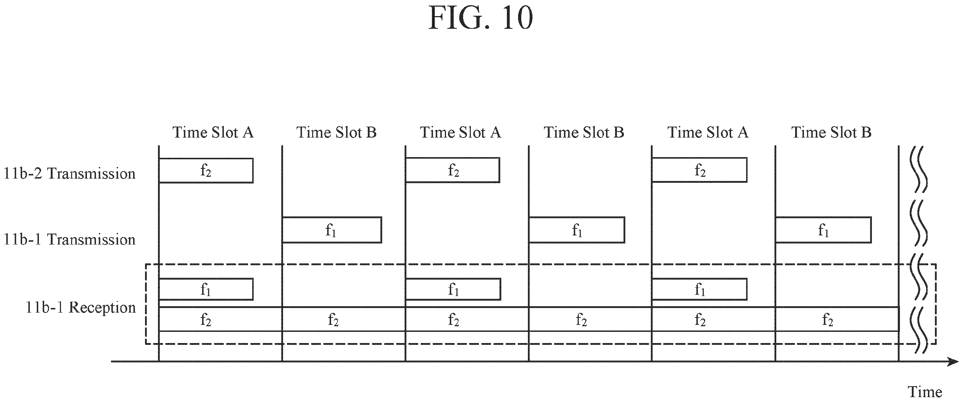

FIG. 8 is a diagram illustrating a configuration example and an operation principle of a radar system 1b according to the second embodiment. FIG. 8A illustrates a state in a time slot A illustrated in FIG. 10, and FIG. 8B illustrates a state in a time slot B illustrated in FIG. 10.

The radar system 1b is a system including a plurality of radar devices and capable of detecting a distance from the radar system 1b to a target 2 and a speed of the target 2 at high speed. The radar system 1b is applicable to, for example, a multi-static radar.

Note that, in FIG. 8, a thick arrow indicates a traveling direction of the target 2, and a thin arrow indicates a traveling direction of a radar signal transmitted from the radar device or a radar reflected wave that is a radar signal reflected by the target 2.

As illustrated in FIG. 8, the radar system 1b includes a radar transceiver 11b-1 and a radar transceiver 1 1b-2 as a plurality of radar devices, and further includes a signal control unit 12b.

The radar transceiver 11b-1 is a radar device in which a radar transmitter that performs transmission of a radar signal and a radar receiver that performs reception of a radar signal are integrated.

The radar transceiver 1 1b-1 can transmit a radar signal S-11-1 toward the target 2 as a function of a radar transmitter. Note that the radar signal S-11-1 transmitted by the radar transceiver 1 1b-1 is a pulse-modulated wave.

In addition, the radar transceiver 11b-1 can simultaneously receive, as a function of a radar receiver, radar reflected waves R-11-1 and R-11-2 which are radar signals transmitted by the plurality of radar transceivers 1 1b-1 and 1 1b-2 and reflected by the target 2.

Then, the radar transceiver 1 1b-1 can simultaneously process a plurality of received radar reflected waves R-11-1 and R-11-2. Thus, the radar transceiver 11b-1 can detect the distance from the radar system 1b to the target 2 and the speed of the target 2 at high speed.

Note that, when performing transmission and reception, the radar transceiver 1 1b-1 performs processing of transmitting the radar signal S-11-1 and enabling reception of the radar reflected wave R-11-2 and processing of enabling reception of the radar reflected waves R-11-1 and R-11-2 in a time division manner.

The radar transceiver 11b-2 is a radar device in which a radar transmitter that performs transmission of a radar signal and a radar receiver that performs reception of a radar signal are integrated.

The radar transceiver 1 1b-2 can transmit a radar signal S-11-2 toward the target 2 as a function of a radar transmitter. Note that the radar signal S-11-2 transmitted by the radar transceiver 11b-2 may be a pulse-modulated wave or a non-pulse-modulated radar signal.

In addition, the radar transceiver 11b-2 can simultaneously receive, as a function of a radar receiver, radar reflected waves R-11-1 and R-11-2 which are radar signals transmitted by the plurality of radar transceivers 11b-1 and 11b-2 and reflected by the target 2.

Then, the radar transceiver 1 1b-2 can simultaneously process a plurality of received radar reflected waves R-11-1 and R-11-2. Thus, the radar transceiver 11b-2 can detect the distance from the radar system 1b to the target 2 and the speed of the target 2 at high speed.

Note that, when performing transmission and reception, the radar transceiver 1 1b-2 performs processing of transmitting the radar signal S-11-2 and enabling reception of the radar reflected wave R-11-1 and processing of enabling reception of the radar reflected waves R-11-1 and R-11-2 in a time division manner.

Note that FIG. 8 illustrates a case where the radar transceiver 11b-1 functions as a radar transceiver that performs transmission and reception, and the radar transceiver 11b-2 functions as a radar transceiver that performs only transmission.

The signal control unit 12b controls one or more of a carrier frequency (carrier frequency), a pulse recurrence frequency (PRF), and a duty ratio (Duty) of the pulse-modulated radar signal, and a carrier frequency of a non-pulse-modulated radar signal with respect to the radar transceiver that performs transmission among the radar transceivers 11b-1 and 11b-2.

At this time, the signal control unit 12b performs the above control in such a manner that unnecessary waves generated from the pulse-modulated radar signal and a radar signal different from the radar signal do not interfere with each other. That is, in a case where the carrier frequency of the pulse-modulated radar signal is f_{A}, the pulse recurrence frequency is PRF_{A}, the duty ratio is Duty, and the carrier frequency of the radar signal different from the radar signal is f_{B}, the signal control unit 12b performs the above control so as to satisfy f_{B} = f_{A} ± {PRF_{A} × (1/Duty)} or f_{B} ≠ f_{A} ± nPRF_{A}.

Note that the radar system 1b illustrated in FIG. 8 illustrates a case where two radar transceivers 11b-1 and 11b-2 are provided. That is, the radar system 1b illustrated in FIG. 8 illustrates a configuration example in a case where the number of radar transceivers is the minimum in a case where there are radar transceivers operating as devices that perform transmission and reception. However, the number of the radar transceivers is not limited to the number illustrated in FIG. 8.

In addition, FIG. 8 illustrates a case where the radar transceivers 11b-1 and 11b-2 having both the function of performing transmission and the function of performing reception are provided as the radar devices, the radar transceiver 11b-1 operates as a device that performs transmission and reception, and the radar transceiver 11b-2 operates as a device that performs transmission. In this case, the radar transceivers 11b-1 and 11b-2 can arbitrarily change whether or not to operate to perform transmission and whether or not to operate to perform reception.

On the other hand, in a case where it is not necessary to perform the change, the radar device does not need to be a radar transceiver having both the functions. In this case, for example, a radar transmitter that performs transmission may be provided as the radar device instead of the radar transceiver. For example, in the example of FIG. 8, the radar transceiver 11b-2 may be a radar transmitter (second radar transmitter).

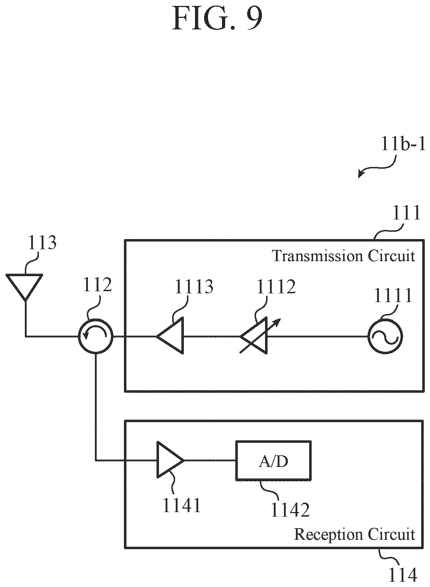

Next, a circuit configuration example of the radar transceivers 11b-1 and 11b-2 will be described with reference to FIG. 9. FIG. 9 illustrates a circuit configuration example of the radar transceiver 11b-1, but the same applies to a circuit configuration example of the radar transceiver 11b-2. Further, the same applies to circuit configuration examples of the radar transceivers 1 1a-1 to 11a-3 in the first embodiment.

As illustrated in FIG. 9, the radar transceiver 11b-1 includes a transmission circuit 111, a circulator 112, an antenna 113, and a reception circuit 114.

As illustrated in FIG. 9, the transmission circuit 111 includes a signal generating circuit 1111, a variable gain amplifier 1112, and a high-power amplifier 1113.

The signal generating circuit 1111 generates a radar signal. Note that the carrier frequency, the pulse recurrence frequency, and the duty ratio of the radar signal generated by the signal generating circuit 1111 are controlled by the signal control unit 12b.

The variable gain amplifier 1112 amplifies the radar signal generated by the signal generating circuit 1111. At this time, the variable gain amplifier 1112 amplifies the radar signal in such a manner that an output power level of the high-power amplifier 1113 becomes optimum as a radar signal, and drives the high-power amplifier 1113.

The high-power amplifier 1113 amplifies the radar signal amplified by the variable gain amplifier 1112. At this time, the high-power amplifier 1113 amplifies the radar signal having reached the target 2 and reflected to power that can be received by another radar device. Then, the high-power amplifier 1113 outputs the amplified radar signal to the circulator 112.

The circulator 112 outputs the radar signal amplified by the high-power amplifier 1113 to the antenna 113. In addition, the circulator 112 outputs the radar signal received by the antenna 113 to the reception circuit 114.

The antenna 113 transmits the radar signal input from the circulator 112 to the outside (target 2). Furthermore, the antenna 113 receives a radar reflected wave that is a radar signal from the outside of the radar, and outputs the radar reflected wave to the circulator 112.

As illustrated in FIG. 9, the reception circuit 114 includes a low noise amplifier 1141 and an A/D converter 1142.

The low noise amplifier 1141 amplifies the radar signal input from the circulator 112. At this time, the low noise amplifier 1141 amplifies the radar signal to power that can be sampled by the A/D converter 1142. Then, the low noise amplifier 1141 outputs the amplified radar signal to the A/D converter 1142.

The A/D converter 1142 converts the radar signal amplified by the low noise amplifier 1141 into a digital signal.

Note that the signal generating circuit 1111 and the variable gain amplifier 1112 may always operate, or may be turned on and off in synchronization with the duty ratio and may be stopped when not transmitting a radar signal.

On the other hand, the high-power amplifier 1113 is one of element circuits that consume a large amount of power in the transmission/reception circuit, in order to suppress the power consumption, and thus it is desirable to enable an operation power supply to be turned on and off in synchronization with the duty ratio, and stop the operation power supply when the radar signal is not transmitted.

Next, an operation example of the radar system 1b according to the second embodiment illustrated in FIG. 8 will be described with reference to FIG. 10. Note that, in FIG. 10, "11b-2 transmission" means a transmission operation by the radar transceiver 11b-2, "11b-1 transmission" means a transmission operation by the radar transceiver 11b-1, and "11b-1 reception" means a reception operation by the radar transceiver 11b-1.

In the radar system 1b according to the second embodiment, the operation is divided into operations in two time slots (time slot A and time slot B).

In the examples of FIGS. 8 and 10, first, in the time slot A, the radar transceiver 11b-2 transmits the radar signal S-11-2 toward the target 2. Note that it is assumed that the radar transceiver 11b-1 transmits the radar signal S-11-1 toward the target 2 in the time slot B immediately before the time slot A. In addition, it is assumed that both the radar signal S-11-1 and the radar signal S-11-2 are pulse-modulated waves.

Then, in the time slot A, the radar transceiver 1 1b-1 receives the radar reflected wave R-11-1 transmitted by the radar transceiver 1 1b-1 in the time slot B immediately before the time slot A and reflected by the target 2.

Note that the radar reflected wave R-11-2 transmitted by the radar transceiver 11b-2 in the time slot A and reflected by the target 2 may reach the radar transceiver 1 1b-1 in the time slot A depending on the distance to the target 2. Thus, the radar transceiver 11b-1 also receives the radar reflected wave R-11-2.

Next, in the time slot B, the radar transceiver 11b-1 transmits the radar signal S-11-1 toward the target 2.

Then, in the time slot B, the radar transceiver 11b-1 receives the radar reflected wave R-11-2 transmitted by the radar transceiver 1 1b-2 in the time slot A immediately before the time slot and reflected by the target 2.

Then, the radar transceiver 11b-1 simultaneously performs signal processing on the received radar reflected wave R-11-1 and radar reflected wave R-11-2. Thus, the radar transceiver 11b-1 detects the distance from the radar system 1b to the target 2 and the speed of the target 2 at high speed.

Next, the operation of the radar transceiver 11b-1 in the time slot B will be described in more detail.

In the time slot B, the radar signal generated by the signal generating circuit 1111 is amplified by the variable gain amplifier 1112 and the high-power amplifier 1113 and transmitted from the antenna 113 via the circulator 112. Here, the radar signal transmitted from the antenna 113 has high power. Thus, about 1/100 of the power of the radar signal leaks into the reception circuit 114 due to isolation of the circulator 112 or reflection at the antenna 113. Then, the leakage of the radar signal S-11-1 and the radar reflected wave R-11-2 are input to the A/D converter 1142 via the low noise amplifier 1141. Note that, when the target 2 is located far away, the power of leakage of the radar signal S-11-1 may be larger than the power of the radar reflected wave R-11-2.

As described above, in the time slot B, since the radar transceiver 1 1b-1 simultaneously transmits and receives the radar signal, an unnecessary wave generated from the radar signal S-11-1 can be an interference wave with respect to the radar reflected wave R-11-2.

Accordingly, the signal control unit 12b controls one or more of the carrier frequency, the PRF, and the duty ratio of the radar signal S-11-1, and the carrier frequency, the PRF, and the duty ratio of the radar signal S-11-2 in such a manner that the radar reflected wave and the unnecessary wave do not interfere with each other.

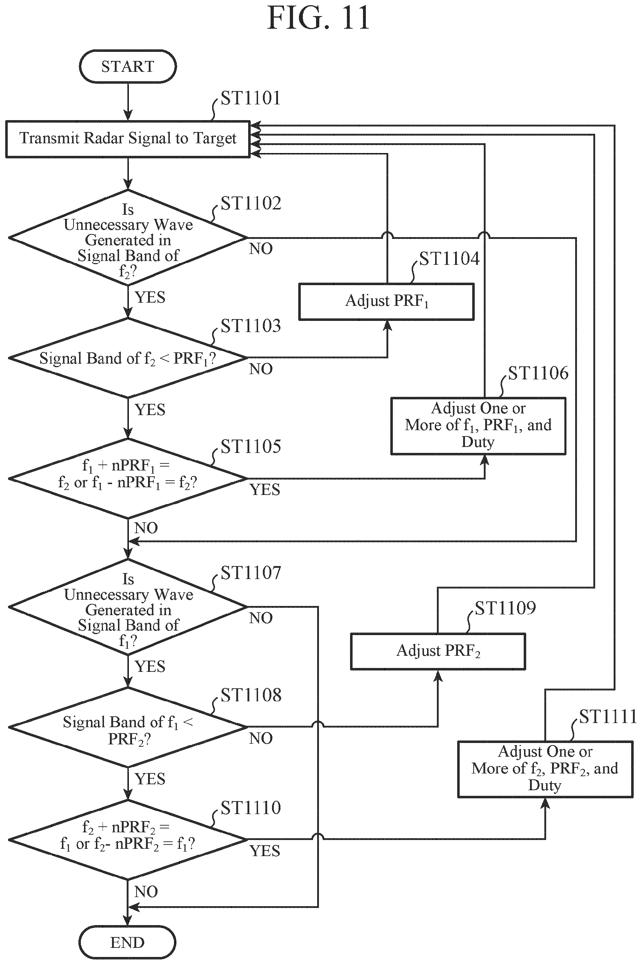

Next, a control operation example of a radar signal in the radar system 1b according to the second embodiment illustrated in FIG. 8 will be described with reference to FIG. 11.

Note that the control operation of the radar signal in the radar system 1b is performed before the operation of the radar system 1b is started. In addition, it is assumed that the carrier frequency of the radar signal S-11-1 is f₁ and the pulse recurrence frequency thereof is PRF₁, and the carrier frequency of the radar signal S-1 1-2 is f₂ and the pulse recurrence frequency thereof is PRF₂.

In the control operation example of the radar signal in the radar system 1b according to the second embodiment illustrated in FIG. 8, as illustrated in FIG. 11, first, the radar transceiver 11b-1 transmits the radar signal S-11-1 to the target 2, and the radar transceiver 11b-2 transmits the radar signal S-11-2 to the target 2 (step ST1101). Note that the signal control unit 12b instructs the radar transceivers 11b-1 and 11b-2 to transmit the radar signals S-11-1 and S-11-2 after setting the carrier frequency, the pulse recurrence frequency, and the duty ratio in advance.

Thereafter, the radar transceiver 1 1b-1 receives the radar reflected wave R-11-1, which is a radar signal transmitted by the radar transceiver 11a-1 and reflected by the target 2, and the radar reflected wave R-11-2, which is a radar signal transmitted by the radar transceiver 11b-2 and reflected by the target 2.

Next, the radar transceiver 11b-1 determines whether or not there is an unnecessary wave in the signal band of f₂ (step ST1102).

At this time, for example, the radar transceiver 11b-1 down-converts the radar reflected wave R-11-2 from a high-frequency signal to a signal of a baseband frequency using a local oscillation signal (LO) generated in the vicinity of f₂ by a down-converter (not illustrated). Then, the radar transceiver 11b-1 may determine that there is an unnecessary wave when it is determined that there is a signal having power equal to or higher than a certain threshold near the desired band from the result of the down conversion.

In addition, for example, when f₁ and f₂ are known, the radar transceiver 11b-1 down-converts the radar reflected wave R-11-2 from a high-frequency signal to a signal of a baseband frequency using a local oscillation signal under a condition of f₂ ≈ f₁ ± nPRF₁ by the down-converter (not illustrated). Then, the radar transceiver 11b-1 may determine that there is an unnecessary wave when it is determined that there is a voltage of a DC component equal to or greater than the threshold from the output of the down-converter.

Furthermore, for example, the radar transceiver 11b-2 transmits pilot signals for notifying the radar transceiver 1 1b-1 of f₂ and the signal bands of fz in advance. Then, the radar transceiver 11b-1 may determine the presence of the unnecessary wave using the information indicated by the pilot signals and f₁ and PRF₁.

In step ST1102, when the radar transceiver 11b-1 determines that there is an unnecessary wave in the signal band of f₂, the radar transceiver 11b-1 or the signal control unit 12b determines whether the condition of the signal band of fz < PRF₁ is satisfied (step ST1103).

At this time, for example, the signal control unit 12b may determine whether the above conditions are satisfied on the basis of information held in advance.

Furthermore, for example, the radar transceiver 11b-2 transmits pilot signals for notifying the radar transceiver 11b-1 of f₂ and the signal bands of fz in advance. Then, the radar transceiver 11b-1 may determine whether the above conditions are satisfied using the information indicated by the pilot signals and f₁ and PRF₁.

In addition, when the radar transceiver 11b-1 receives the radar reflected wave R-11-2 having a reception band including an unnecessary wave, the amplitude of the signal becomes discontinuous when the radar reflected wave R-11-2 is down-converted. Accordingly, for example, the radar transceiver 11b-1 may determine whether or not the above condition is satisfied by determining the presence or absence of the discontinuity.

In step ST1103, when the radar transceiver 11b-1 or the signal control unit 12b determines that the condition of the signal band of fz < PRF₁ is not satisfied, the signal control unit 12b adjusts PRF₁ of the radar signal S-11-1 so as to satisfy the condition of the signal band of fz < PRF₁ (step ST1104). That is, if the condition of the signal band of fz < PRF₁ is not satisfied, a plurality of unnecessary waves interfere in the signal band, and thus the signal control unit 12b performs adjustment to prevent the interference.

Thereafter, the sequence returns to step ST1101.

On the other hand, in step ST1103, when the radar transceiver 11b-1 or the signal control unit 12b determines that the condition of the signal band of fz < PRF₁ is satisfied, the radar transceiver 11b-1 or the signal control unit 12b determines whether the condition of f₁ + nPRF₁ = f₂ or f₁ - nPRF₁ = f₂ is satisfied (step ST1105).

At this time, for example, the signal control unit 12b may determine whether the above conditions are satisfied on the basis of information held in advance.

Furthermore, for example, the radar transceiver 11b-2 transmits pilot signals for notifying the radar transceiver 11b-1 of f₂ and the signal bands of f₂ in advance. Then, the radar transceiver 11b-1 may determine whether the above conditions are satisfied using the information indicated by the pilot signals and f₁ and PRF₁.

Furthermore, for example, the radar transceiver 11b-1 down-converts the radar reflected wave R-11-2, performs Fourier series expansion of the result, and obtains the PRF of the frequency obtained from the result. Then, the radar transceiver 11b-1 may determine whether the above condition is satisfied from the obtained PRF. Note that, in order to down-convert the radar reflected wave R-11-2, f₁ and f₂ are known in the radar transceiver 11b-1.

In step ST1105, when the radar transceiver 11b-1 or the signal control unit 12b determines that the condition of f₁ + nPRF₁ = fz or f₁ - nPRF₁ = fz is satisfied, the signal control unit 12b adjusts one or more of f₁, PRF₁, and the duty ratio of the radar signal S-11-1 so as to satisfy the condition of f₁ ± nPRF₁ ≠ fz (step ST1106).

Thereafter, the sequence returns to step ST1101.

On the other hand, in step ST1102, when the radar transceiver 11b-1 determines that there is no unnecessary wave in the signal band of f₂, and in step ST1105, when the radar transceiver 11b-1 or the signal control unit 12b determines that the condition of f₁ + nPRF₁ = fz or f₁ - nPRF₁ = fz is not satisfied, the sequence proceeds to step ST1107.

Next, the radar transceiver 11b-1 determines whether or not there is an unnecessary wave in the signal band of f₁ (step ST1107).

At this time, for example, the radar transceiver 11b-1 down-converts the radar reflected wave R-11-1 from a high-frequency signal to a signal of a baseband frequency using a local oscillation signal (LO) generated in the vicinity of f₁ by the down-converter (not illustrated). Then, the radar transceiver 1 1b-1 may determine that there is an unnecessary wave when it is determined that there is a signal having power equal to or higher than the certain threshold near the desired band from the result of the down conversion.

In addition, for example, when f₁ and f₂ are known, the radar transceiver 11b-1 down-converts the radar reflected wave R-11-1 from a high-frequency signal to a signal of a baseband frequency using a local oscillation signal under a condition of f₁ ≈ f₂ ± nPRFz by the down-converter (not illustrated). Then, the radar transceiver 11b-1 may determine that there is an unnecessary wave when it is determined that there is a voltage of a DC component equal to or greater than the threshold from the output of the down-converter.

Furthermore, for example, the radar transceiver 11b-2 transmits pilot signals for notifying the radar transceiver 11b-1 of fz and PRFz in advance. Then, the radar transceiver 11a-3 may determine the presence of the unnecessary wave using the information indicated by the pilot signals and f₁ and the signal bands of f₁.

In step ST1107, when the radar transceiver 11b-1 determines that there is an unnecessary wave in the signal band of f₁, the radar transceiver 11b-1 or the signal control unit 12b determines whether the condition of the signal band of f₁ < PRFz is satisfied (step ST1108).

At this time, for example, the signal control unit 12b may determine whether the above conditions are satisfied on the basis of information held in advance.

Furthermore, for example, the radar transceiver 11b-2 transmits pilot signals for notifying the radar transceiver 11b-1 of fz and PRFz in advance. Then, the radar transceiver 11b-1 may determine whether the above condition is satisfied using the information indicated by the pilot signals and f₁ and the signal bands of f₁.

In addition, when the radar transceiver 11b-1 receives the radar reflected wave R-11-1 having a reception band including an unnecessary wave, the amplitude of the signal becomes discontinuous when the radar reflected wave R-11-1 is down-converted. Accordingly, for example, the radar transceiver 11b-1 may determine whether or not the above condition is satisfied by determining the presence or absence of the discontinuity.

In step ST1108, when the radar transceiver 11b-1 or the signal control unit 12b determines that the condition of the signal band of f₁ < PRF₂ is not satisfied, the signal control unit 12b adjusts PRF₂ of the radar signal S-11-2 so as to satisfy the condition of the signal band of f₁ < PRF₂ (step ST1109). That is, if the condition of the signal band of f₁ < PRF₂ is not satisfied, a plurality of unnecessary waves interfere in the signal band, so that the signal control unit 12b performs adjustment to prevent the interference.

Thereafter, the sequence returns to step ST1101.

On the other hand, in step ST1108, when the radar transceiver 11b-1 or the signal control unit 12b determines that the condition of the signal band of f₁ < PRF₂ is satisfied, the radar transceiver 11b-1 or the signal control unit 12b determines whether the condition of f₂ + nPRF₂ = f₁ or fz- nPRFz = f₁ is satisfied (step ST1110).

At this time, for example, the signal control unit 12b may determine whether the above conditions are satisfied on the basis of information held in advance.

Furthermore, for example, the radar transceiver 11b-2 transmits pilot signals for notifying the radar transceiver 1 1b-1 of fz and PRF₂ in advance. Then, the radar transceiver 11b-1 may determine whether the above condition is satisfied using the information indicated by the pilot signals and f₁ and the signal bands of f₁.

Furthermore, for example, the radar transceiver 11b-1 down-converts the radar reflected wave R-11-1, performs Fourier series expansion of the result, and obtains the PRF of the frequency obtained from the result. Then, the radar transceiver 1 1b-1 may determine whether the above condition is satisfied from the obtained PRF. Note that, in order to down-convert the radar reflected wave R-11-1, f₁ and f₂ are known in the radar transceiver 11b-1.

In step ST1110, when the radar transceiver 11b-1 or the signal control unit 12b determines that the condition of f₂ + nPRFz = f₁ or f₂- nPRFz = f₁ is satisfied, the signal control unit 12b adjusts one or more of fz, PRFz, and the duty ratio of the radar signal S-11-2 so as to satisfy the condition of fz ± nPRFz ≠ f₁ (step ST1111).

Thereafter, the sequence returns to step ST1101.

On the other hand, when the radar transceiver 11b-1 determines in step ST1107 that there is no unnecessary wave in the signal band of f₁, and when the radar transceiver 11b-1 or the signal control unit 12b determines in step ST1110 that the condition of f₂ + nPRFz = f₁ or fz- nPRFz = f₁ is not satisfied, the sequence ends

### Third Embodiment.

In the first and second embodiments, as an example, the case where both the radar signal S-11-1 and the radar signal S-11-2 are pulse-modulated signals has been mainly described. However, without being limited to this, the radar signal S-11-2 may be a continuous wave instead of a pulse-modulated radar signal, that is, not a repeated radar signal controlled by a duty ratio of a pulse wave.

Note that a configuration example of a radar system according to a third embodiment is similar to the configuration example of the radar system 1a according to the first embodiment illustrated in FIG. 1 or the configuration example of the radar system 1b according to the second embodiment illustrated in FIG. 8. Hereinafter, a case where the radar system according to the third embodiment is the radar system 1a according to the first embodiment illustrated in FIG. 1 will be described as an example.

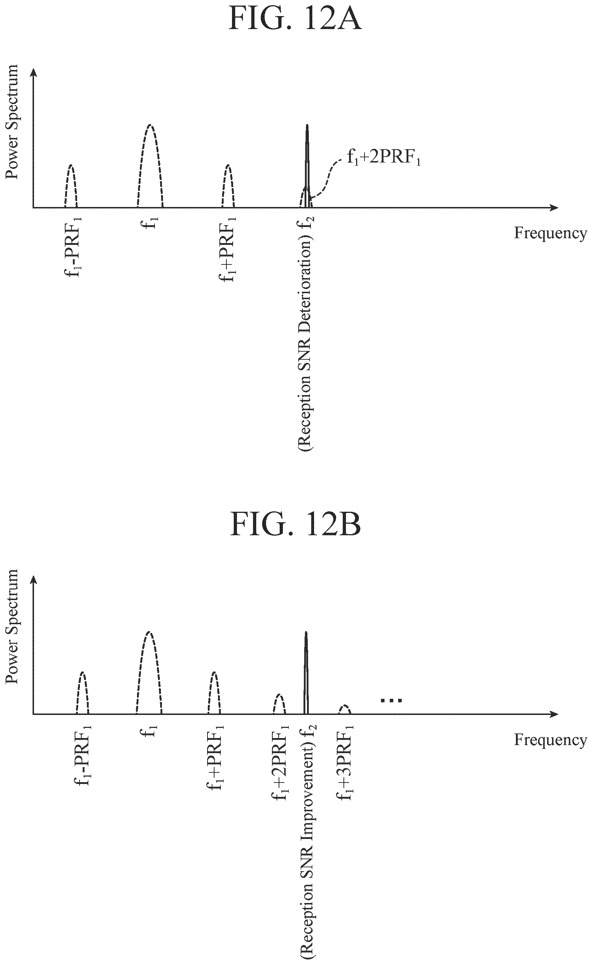

FIG. 12 is a diagram illustrating an operation example of a signal control unit 12a in the third embodiment. FIG. 12 illustrates a case where the radar signal having the carrier frequency f₁ is a pulse-modulated wave, and the radar signal having the carrier frequency f₂ is a continuous wave.

FIG. 12A illustrates a state before control by the signal control unit 12a, and an unnecessary wave generated from the radar reflected wave R-11-1 interferes with the radar reflected wave R-11-2. In this case, the reception SNR of the radar reflected wave R-11-2 is deteriorated, and the reception sensitivity is deteriorated.

On the other hand, FIG. 12B illustrates a case where the signal control unit 12a controls one or more of the carrier frequencies, the pulse recurrence frequency, and the duty ratio of the radar signal S-11-1, and the carrier frequency of the radar signal S-11-2. Thus, deterioration of the reception SNR of the radar reflected wave R-11-2 can be prevented, and deterioration of the reception sensitivity can be prevented.

Note that, in FIG. 12, since the radar signal S-11-2 having the carrier frequency fz is a continuous wave, an unnecessary wave is not generated from the radar signal S-11-2.

Further, a specific method of controlling the radar signal by the signal control unit 12a in the third embodiment is similar to the specific method of controlling the radar signal by the signal control unit 12a described in the first embodiment.

### Fourth Embodiment.

In the radar systems 1a and 1b according to the first and second embodiments, the case of receiving two radar signals has been mainly described. On the other hand, in a radar system according to a fourth embodiment, a case where three or more radar signals are received will be described.

Note that a configuration example of the radar system according to the fourth embodiment is similar to the configuration example of the radar system 1a according to the first embodiment illustrated in FIG. 1 or the configuration example of the radar system 1b according to the second embodiment illustrated in FIG. 8. Hereinafter, a case where the radar system according to the fourth embodiment is the radar system 1b according to the second embodiment illustrated in FIG. 8 will be described as an example.

Note that, in this case, a plurality of at least one of the radar transceivers 11b-1 or the radar transceivers 1 1b-2 are provided. Here, it is assumed that a plurality of the radar transceivers 11b-2 is provided, and referred to as radar transceivers 11b-2 to 11b-N. N is an integer of 3 or more.

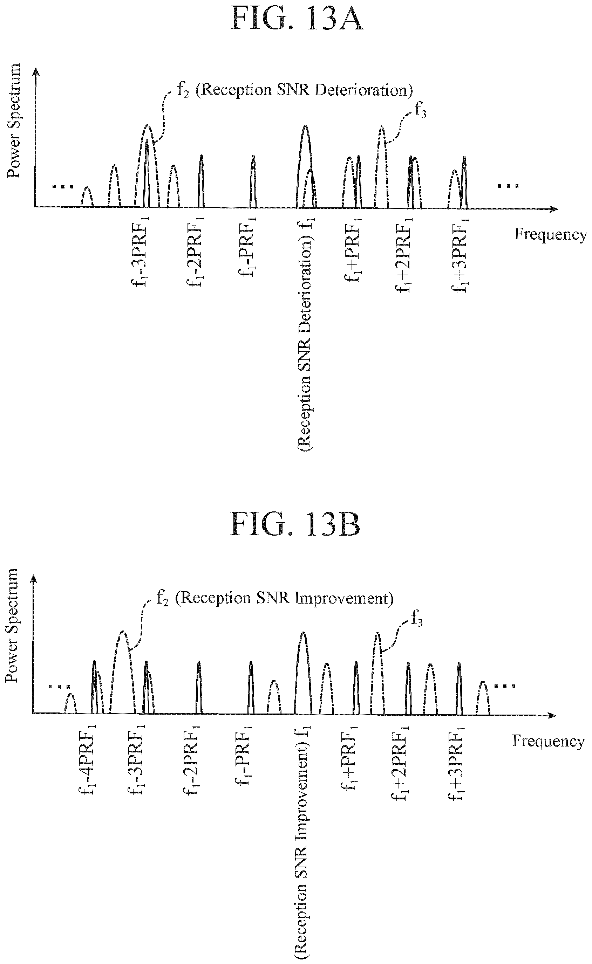

FIG. 13 is a diagram illustrating an operation example of signal control unit 12b in the fourth embodiment. FIG. 13 illustrates a case where two radar transceivers 11b-2 are provided as the radar transceiver 11b-2 and 11b-3, and the radar transceiver 11b-1 receives radar reflected waves R-11-1 to R-11-3 which are three radar signals.

FIG. 13A illustrates a state before control by the signal control unit 12b, in which an unnecessary wave generated from the radar reflected wave R-11-3 interferes with the radar reflected wave R-11-1, and an unnecessary wave generated from the radar reflected wave R-11-1 interferes with the radar reflected wave R-11-2. In this case, the reception SNR of the radar reflected wave R-11-1 and the radar reflected wave R-11-2 deteriorates, and the reception sensitivity deteriorates.

On the other hand, FIG. 13B illustrates a case where the signal control unit 12b controls fz of the radar signal S-11-2 and controls PRF₃ of the radar signal S-11-3. Thus, deterioration of the reception SNR of the radar reflected wave R-11-1 and the radar reflected wave R-11-2 can be prevented, and deterioration of the reception sensitivity can be prevented.

As described above, when the radar system 1b receives three or more radar reflected waves, the signal control unit 12b controls one or more of the carrier frequency, the pulse recurrence frequency, and the duty ratio of each radar signal in such a manner that each radar reflected wave and an unnecessary wave generated from each radar reflected wave do not interfere with each other.

Note that, in the radar system 1b, first, in the time slot A, the radar transceivers 11b-2 to 11b-N transmit the radar signals S-11-2 to S-11-N toward the target 2. Note that it is assumed that the radar transceiver 11b-1 transmits the radar signal S-11-1 toward the target 2 in the time slot B immediately before the time slot A.

Then, in the time slot A, the radar transceiver 1 1b-1 receives the radar reflected wave R-11-1 transmitted by the radar transceiver 11b-1 in the time slot B immediately before the time slot A and reflected by the target 2.

Note that the radar reflected waves R-11-2 to R-11-N transmitted by the radar transceivers 11b-2 to 11b-N in the time slot A and reflected by the target 2 may reach the radar transceiver 1 1b-1 in the time slot A depending on the distance to the target 2. Thus, the radar transceiver 11b-1 also receives the radar reflected waves R-11-2 to R-11-N.

Next, in the time slot B, the radar transceiver 11b-1 transmits the radar signal S-11-1 toward the target 2.

Then, in the time slot B, the radar transceiver 11b-1 receives the radar reflected waves R-11-2 to R-11-N transmitted by the radar transceivers 11b-2 to 11b-N in the time slot A immediately before the time slot and reflected by the target 2.

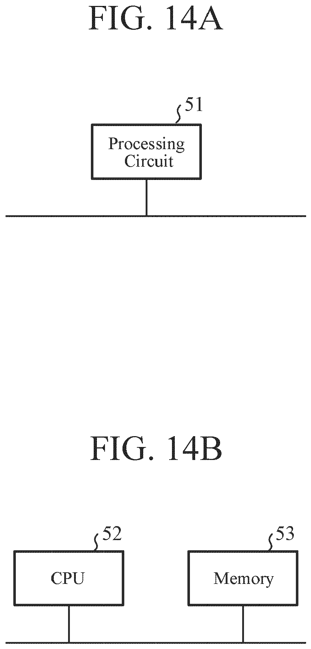

Finally, a hardware configuration example of the signal control units 12a and 12b of the first to fourth embodiments will be described with reference to FIG. 14. Note that, although FIG. 14 illustrates a hardware configuration example of the signal control unit 12a of the first embodiment, the same applies to hardware configuration examples of the signal control units 12a and 12b of the second to fourth embodiments.

The function of the signal control unit 12a is achieved by a processing circuit 51. The processing circuit 51 may be dedicated hardware as illustrated in FIG. 14A, or may be a central processing unit (CPU, which may also be referred to as a central processing device, a processing device, an arithmetic device, a microprocessor, a microcomputer, a processor, or a digital signa processor (DSP)) 52 that executes a program stored in a memory 53 as illustrated in FIG. 14B.

In a case where the processing circuit 51 is dedicated hardware, the processing circuit 51 corresponds to, for example, a single circuit, a composite circuit, a programmed processor, a parallel programmed processor, an application specific integrated circuit (ASIC), a field-programmable gate array (FPGA), or a combination thereof.

When the processing circuit 51 is the CPU 52, the function of the signal control unit 12a is implemented by software, firmware, or a combination of software and firmware. The software and the firmware are described as programs and stored in the memory 53. The processing circuit 51 implements the function of the signal control unit 12a by reading and executing the program stored in the memory 53. That is, the signal control unit 12a includes the memory 53 for storing a program that results in execution of each step illustrated in FIG. 7, for example, when executed by the processing circuit 51. It can also be said that these programs cause a computer to execute the procedure and method of the signal control unit 12a. Here, the memory 53 corresponds to, for example, a nonvolatile or volatile semiconductor memory such as a random access memory (RAM), a read only memory (ROM), a flash memory, an erasable programmable ROM (EPROM), or an electrically-EPROM (EEPROM), a magnetic disk, a flexible disk, an optical disk, a compact disk, a mini disk, or a digital versatile disc (DVD).

Note that a part of the functions of the signal control unit 12a may be implemented by dedicated hardware, and a part thereof may be implemented by software or firmware.

As described above, the processing circuit 51 can implement the above-described functions by hardware, software, firmware, or a combination thereof.

Note that free combinations of the individual embodiments, modifications of any components of the individual embodiments, or omissions of any components in the individual embodiments are possible.

### INDUSTRIAL APPLICABILITY

The radar system according to the present disclosure can suppress interference due to unnecessary waves generated when a radar signal is pulse-modulated, and is suitable for use in a radar system or the like including a plurality of radar devices, as compared with the related art.

### REFERENCE SIGNS LIST

1a: radar system, 1b: radar system, 2: target, 11a-1: radar transceiver, 11a-2: radar transceiver, 11a-3: radar transceiver, 11b-1: radar transceiver, 11b-2: radar transceiver, 11b-3: radar transceiver, 12a: signal control unit, 12b: signal control unit, 51: processing circuit, 52: CPU, 53: memory, 111: transmission circuit, 112: circulator, 113: antenna, 114: reception circuit, 1111: signal generating circuit, 1112: variable gain amplifier, 1113: high-power amplifier, 1141: low noise amplifier, 1142: A/D converter

## Claims

1. A radar system comprising:
a first radar transmitter capable of transmitting a pulse-modulated radar signal to a target;
a second radar transmitter capable of transmitting a radar signal to the target;
a radar receiver capable of simultaneously receiving a radar signal transmitted by the first radar transmitter and reflected by the target and a radar signal transmitted by the second radar transmitter and reflected by the target; and
a signal control unit to control one or more of a carrier frequency, a pulse recurrence frequency, and a duty ratio of a pulse-modulated radar signal, and a carrier frequency of a non-pulse-modulated radar signal with respect to the first radar transmitter or the first radar transmitter and the second radar transmitter.

2. The radar system according to claim 1, wherein
the signal control unit controls a carrier frequency, a pulse recurrence frequency, and a duty ratio of a pulse-modulated radar signal, and a carrier frequency of a non-pulse-modulated radar signal with respect to the first radar transmitter or the first radar transmitter and the second radar transmitter.

3. The radar system according to claim 1, wherein
in a case where the carrier frequency of the pulse-modulated radar signal is f_{A}, the pulse recurrence frequency is PRF_{A}, the duty ratio is Duty, a carrier frequency of a radar signal different from the radar signal is f_{B}, and a positive integer is n, the signal control unit performs the control so as to satisfy f_{B} = f_{A} ± {PRF_{A} × (1/Duty)} or f_{B} ≠ f_{A} ± nPRF_{A}.

4. The radar system according to claim 1, wherein
at least one of the first radar transmitter or the second radar transmitter is configured as a radar transceiver integrated with the radar receiver.

5. The radar system according to claim 4, wherein
the radar transceiver performs processing of transmitting a radar signal and enabling reception of a radar signal and processing of enabling reception of a plurality of radar signals including a radar signal transmitted by the radar transceiver and reflected by the target in a time-division manner.

6. The radar system according to claim 4, wherein
the radar transceiver includes
a signal generating circuit to generate a radar signal,
a variable gain amplifier to amplify the radar signal generated by the signal generating circuit,
a high-power amplifier to amplify a radar signal amplified by the variable gain amplifier,
a low noise amplifier to amplify an input radar signal,
an A/D converter to convert a radar signal amplified by the low-noise amplifier into a digital signal,
an antenna to transmit an input radar signal to an outside of the radar system and receive a radar signal from the outside of the radar system, and
a circulator to output a radar signal amplified by the high-power amplifier to the antenna and output a radar signal received by the antenna to the low-noise amplifier.

7. The radar system according to claim 4, wherein
the radar transceiver is capable of arbitrarily changing whether or not to operate to perform transmission and whether or not to operate to perform reception.

8. The radar system according to claim 1, wherein
the signal control unit performs control before starting operation of the radar system.

9. The radar system according to claim 1, wherein
a plurality of at least one of the first radar transmitters or the second radar transmitters are provided, and
the radar receiver is capable of simultaneously receiving three or more radar signals.
